# EUROPEAN PATENT SPECIFICATION

(11) **EP 4 329 477 B1**
(45) Date of publication and mention of the grant of the patent: **29.01.2025**
(21) Application number: 21843712.7
(22) Date of filing: 21.12.2021
(51) Int. Cl.: A01G 25/09

(54) **GARDEN CARE VEHICLE, WATER SUPPLY STATION AND SYSTEM COMPRISING A GARDEN CARE VEHICLE AND A WATER SUPPLY STATION**
GARTENPFLEGEFAHRZEUG, WASSERVERSORGUNGSSTATION UND SYSTEM MIT EINEM GARTENPFLEGEFAHRZEUG UND EINER WASSERVERSORGUNGSSTATION
VÉHICULE D'ENTRETIEN DE JARDIN, STATION D'ALIMENTATION D' EAU ET SYSTÈME COMPRENANT UN VÉHICULE D'ENTRETIEN DE JARDIN ET UNE STATION D'ALIMENTATION D' EAU

(30) Priority: 30.04.2021 EP 21171507
(43) Date of publication of application: 06.03.2024
(73) Proprietor: HUSQVARNA AB, 561 82 Huskvarna (SE)
(72) Inventor: SCHENK, Christoph, 89610 Oberdischingen (DE)
(74) Representative: Finkele, Rolf
(86) International application number: PCT/EP2021/087034
(87) International publication number: WO 2022/228708

(56) References cited:
- EP-A1- 3 479 682
- WO-A1-2016/202290
- CN-A- 109 566 065
- GB-A- 2 462 720
- US-A1- 2015 359 185
- US-A1- 2017 020 087
- US-A1- 2019 023 396

## Description

The present invention relates generally to the field of garden irrigation or garden watering. More specifically, the present invention relates to a garden care vehicle comprising at least one watering device, to a water supply station and to a system including such a garden care vehicle and such a water supply station.

### BACKGROUND OF THE INVENTION

Systems including irrigation robots or vehicles for automatic irrigation or watering are known. Such systems typically require a water supply station to be connected with the irrigation robot for supplying water to the irrigation robot via a hose or for filling a tank of the irrigation robot. Finding the water supply station by the irrigation robot and establishing an automatic connection by the irrigation robot for supplying the irrigation robot with water from the water supply station has been an issue to former developments.

The document US 4,522,338 discloses a self-propelled irrigation system including a self powered cart and hose connection system by which access is made to various points along the length of the water supply main. The cart moves along a prescribed path defined by a ground mounted electrical conductor wire which is arranged in relation to individual water access valves. The cart approaches an individual water access valve guided by the electrical conductor wire. Additionally, signals are received by a computer from various signal emitters connected to the electrical conductor and spaced at strategic locations along the path of the cart. Signals from the signal emitters are received by a sensor at the forward end of the cart frame. Upon reaching an access valve the computer receives a signal from such an emitter via a signal emitter sensor and activates the hose reel motor to lower the standpipe toward the access valve from its suspended position on the cart frame. The standpipe bottom will be guided into position over the access valve as it is lowered.

The document DE 10 2008 041 323 A1 discloses an irrigation robot that is enabled to control autonomously watering means. Specifically the irrigation robot is enabled to navigate to and to dock to a water supply station autonomously, wherein odometry data or GPS data are used for autonomous navigation.

GB 2462720 A describes an irrigation robot, wherein positioning determining means are realized to determine a position of the robot vehicle on the basis of the unwound and/or wound-up hose length and/or on the basis of the unwound and/or wound-up length of a position cable and/or on the basis of the angular position of the hose or of the position cable relative to at least one relative or absolute reference axis, for example the length of a celestial direction and/or on the basis of odometry data, and/or on the basis of carried sensors, in particular infrared sensors, and/or on the basis of global positional data, in particular satellite data and/or camera data and/or radio signals and/or light signals.

WO 2016/202290 A1 relates to a connection of a maintenance robot and a base through laser distance measurement. The laser ranging technology used is such that a strip-shaped reflective material is provided on the base to reflect laser light. Accordingly, a laser emitting device and a laser emitting device are provided on the maintenance robot. When the laser receiving device needs to be docked, the laser emitting device on the maintenance robot emits a laser substantially parallel to the ground through rotating scanning. When the laser encounters the reflective material, it is reflected and received by the maintenance robot. When the device receives it, the maintenance robot walks along the laser light path and gradually approaches the base, and continuously emits laser light and receives reflected light during the walking process, so as to accurately detect the distance between it and the base. When the distance is very close and the maintenance robot rotates a predetermined angle, the charging interface on the body and the corresponding parts on the base are aligned and gradually approached to realize the docking.

### SUMMARY OF THE INVENTION

It is an objective of the present invention to provide a garden care vehicle, a water supply station and a system comprising both that simplify automatic finding and connection of the water supply station by and with the garden care vehicle.

This objective is achieved by a garden care vehicle according to claim 1.

According to the invention, the garden care vehicle is configured to be navigable or to navigate
- in a first non-autonomous or autonomous navigation mode towards the water supply station and,
- in response to a detection of the position of the water supply station or the external water outlet or the position marking element,
- in a second non-autonomous or autonomous navigation mode into a position relative to the detected position of the water supply station or the external water outlet or the position marking element.

Hence, the garden care vehicle is specifically configured to be navigable or to navigate in the second non-autonomous or autonomous navigation mode in response to the detection, in the first non-autonomous or autonomous navigation mode, of the position of the water supply station or the external water outlet or the position marking element.

The first non-autonomous or autonomous navigation mode relates to a position detection mode and the second the second non-autonomous or autonomous navigation mode relates to a navigation mode towards the water supply station.

A garden care vehicle according to the invention is enabled to navigate autonomously and very precisely into a position in which the coupling element can be coupled to the water outlet of the water supply station. Therefore, commonly known tap structures or hose fittings can be used for the coupling element and the water outlet. These effects are achieved in that the garden care vehicle can search and detect the position of the water supply station or of a water outlet of the water supply station or of a position marking element associated with the water outlet in a first navigation mode and to enter into the second navigation mode in response to the detection of the position, wherein in the second navigation mode, the detected position of the water supply station or the water outlet or the position marking element is used for navigating into the correct coupling position. It is possible to foresee that the second navigation mode overruns the first navigation mode in response to the detection of the position of the water supply station or the external water outlet or the position marking element. The garden care vehicle may be a combined mowing and watering robotic vehicle or a watering robotic vehicle.

According to an advantageous embodiment, the garden care vehicle comprises at least one first navigation assistance device, wherein the garden care vehicle navigates in the first navigation mode in dependence on the at least one first navigation assistance device and/or the garden care vehicle navigates in the second autonomous navigation mode in dependence on the at least one second navigation assistance device or in dependence on the at least one first navigation device and the at least one second navigation device.

The garden care vehicle comprises two different navigation assistance devices for navigating in two different navigation modes. Thus, the garden care vehicle is enabled to carry out two different navigation tasks, namely to navigate in the first navigation mode for finding the position of the water supply station and also to navigate during regular watering operation of the vehicle or to navigate to a power supply station, and to navigate in the second navigation mode in which a very precise positioning of the garden care vehicle is required for enabling coupling of the coupling element with the water outlet.

Having such a first navigation assistance device enables the garden care vehicle to navigate autonomously through a garden. Having such a second navigation assistance device enables the garden care vehicle to navigate autonomously into position relative to a water supply station that has suitable means for interacting with the sensor. More specifically, in the first navigation mode, a sensor of the second navigation assistance device may operate in order to search for the water supply station or the water outlet or the position marking element. However, as long as the sensor of the second navigation assistance device does not perceive a position of the water supply station, the garden care vehicle does not make use of the second navigation assistance device and navigates therefore in the first navigation mode. As soon as the sensor of the second navigation assistance device detects the water supply station, the garden care vehicle enters the second navigation mode and uses the second navigation assistance device, specifically a sensor associated with the second navigation assistance device, or a combination of first and second navigation assistance device, specifically the sensors of the first and the second navigation assistance device for navigating in the final position.

It shall be understood that "first" and "second" do not define a ranking in any way.

Further advantageously, the first navigation assistance device comprises a sensor for detecting guide wires or a sensor for detecting obstacles or a sensor, in particular a GPS sensor, for detecting the position of the garden care vehicle within an area of operation,
and/or
wherein the second navigation assistance device comprises a sensor unit for detecting the position of the external water outlet, in particular wherein the sensor unit includes a sensor that is a Hall-Sensor or a magnetic sensor or an optical sensor or a camera.

Hall-Sensor or a magnetic sensor or an optical sensor require such means associated with the water supply station and are very reliable and robust in rough and wet environment. A camera does not require any such means associated with the water supply station and enables position detection by image capturing and recognition.

According to a further advantageous embodiment the at least one coupling element is releasable from the fixed position on the chassis and/or the enclosure elements in response to the garden care vehicle reaching the position relative to the external water outlet in which the at least one coupling element can be coupled to the external water outlet, preferably wherein the at least one coupling element can be coupled to the external water outlet by a movement of the at least one coupling element in a coupling direction, optionally wherein the coupling direction is substantially perpendicular to a central longitudinal axis of the garden care vehicle.

Thus, it is possible to attach the coupling element to the garden care vehicle in such way that it is fixed during normal operation of the vehicle. Further, from such a fixed position, the coupling element can be coupled to the water outlet by a straight movement without any further manipulations of the coupling element being necessary.

By arranging the sensor unit or the sensor in a fixed distance to the fixed position of the coupling element, the control algorithm for autonomously navigating the vehicle is enhanced in a way that it navigates in dependence to this distance as a constant parameter.

An additional advantageous embodiment comprises that the at least one coupling element is arranged at an outer perimeter of the garden care vehicle and the at least one sensor of the sensor unit is arranged on the chassis and/or on the enclosure elements adjacent to the at least one coupling element,
and/or wherein the at least one coupling element and at least the sensor of the sensor unit are arranged outside of an area between the wheels of the garden care vehicle,
and/or wherein the at least one coupling element and at least the sensor of the sensor unit are arranged on or adjacent to a rear side or on or adjacent to a front side of the garden care vehicle,
and/or wherein the at least one coupling element and at least the sensor of the sensor unit are arranged on a line parallel to or matching with a central longitudinal axis of the garden care vehicle, in particular wherein the central longitudinal axis corresponds to a forward and rearward straight ahead driving direction of the garden care vehicle, in particular wherein the coupling element is arranged more distanced from a center point of the garden care vehicle than the sensor.

These specific configurations of coupling element and sensor unit or sensor on the vehicle allow very precise navigation and manoeuvring. Specifically, the vehicle is enabled to manoeuver over very short distances in order to reach the position for coupling the coupling element with the water outlet without extensive movement. Arranging the coupling element and the sensor in one line parallel to or on the central longitudinal axis of the garden care vehicle enables to bring the vehicle into position by simply driving straight forward or rearward without driving curves or rotating.

It can be understood that an arrangement of a sensor with a preferred field of detection further simplifies the control of the autonomous navigation mode of the vehicle. In particular such an arrangement is adapted to the detection of an external water outlet being arranged below the garden care vehicle, e.g. on or in the ground, requiring the coupling element and the sensor to be directed in vertical alignment, but also to the detection of an external water outlet that is arranged on a wall of a building or a rain barrel, requiring the coupling element and the sensor to be directed in horizontal alignment.

According to an advantageous embodiment, the garden care vehicle comprises a chassis for rotatably mounting front wheels and/or rear wheels, and/or enclosure elements, in particular for enclosing one or more motors for driving the front wheels and/or rear wheels.

According to an advantageous embodiment, the garden care vehicle comprises a coupling unit, in particular for coupling the garden care vehicle to the water supply station, more in particular for coupling the garden care vehicle to the external water outlet of the water supply station.

According to an advantageous embodiment, a coupling unit, in particular for coupling the garden care vehicle to the water supply station, more in particular to the external water outlet of the water supply station, is arranged in a fixed position on the chassis and/or on the enclosure elements. The arrangement in a fixed position can improve the coupling to the external water outlet, as the position of the coupling unit on or at the garden care vehicle is or can be known during the navigation.

According to an advantageous embodiment, the coupling unit comprises the at least one coupling element for coupling the garden care vehicle to the water supply station, in particular to the external water outlet of the water supply station.

According to an advantageous embodiment, the at least one coupling element is configured to be coupled to the external water outlet by a movement of the at least one coupling element in a coupling direction. In particular, the coupling direction is vertically or substantially vertically. This improves the coupling to an external water outlet below the garden care vehicle. In particular, the coupling direction is perpendicular or substantially perpendicular to a central longitudinal axis of the garden care vehicle.

According to an advantageous embodiment, the garden care vehicle is configured to navigate freely above the water supply station, more in particular above the external water outlet of the water supply station, into a position wherein the coupling element can be coupled with the external water outlet. In particular, the or a ground clearance of the garden care vehicle is or can be such that the garden care vehicle is configured to navigate freely above the water supply station, more in particular above the external water outlet of the water supply station. In a particular embodiment, the ground clearance of the garden care vehicle is at least 4cm, more in particular at least 8cm. The configuration to navigate freely above the water supply station can improve the coupling to the external water outlet, as the garden care vehicle can preferably be navigated in any direction and position above the water supply station.

According to an advantageous embodiment, the garden care vehicle comprises at least one first navigation assistance device, wherein the garden care vehicle is configured to navigate in the first navigation mode in dependence on the at least one first navigation assistance device, wherein the first navigation assistance device comprises a sensor for detecting the position of the garden care vehicle within an area of operation.

In particular, the sensor for detecting the position of the garden care vehicle within an area of operation is of a different type compared to the sensor unit for detecting the position of the external water outlet. More in particular, the sensor for detecting the position of the garden care vehicle within an area of operation is or comprises a position sensor and/or the sensor unit for detecting the position of the external water outlet is or comprises a proximity sensor and/or distance sensor.

The object of the invention is further solved by a water supply station according to claim 10.

Such a water supply station enables interaction with a sensor of a garden care vehicle searching the water supply station, wherein the water supply station according to the invention assists the garden care vehicle in autonomously navigating into a position in which the coupling element of the vehicle can be coupled with the water outlet of the water supply station.

According to a further advantageous embodiment, the position marking element is arranged in a fixed distance to the water outlet, in particular wherein the water supply station further comprises or is arranged close to a guide wire configured for guiding a garden care vehicle, preferably in a first navigation mode of a garden care vehicle, more preferably a garden care vehicle according to any one of the claims 1 to 7, towards the water supply station, wherein at least a part of the guide wire that is adjacent to the water supply station, the position marking element and the water outlet are arranged in the same vertical plane.

Such a configuration is adapted to a garden care vehicle having a corresponding configuration of sensor and coupling element. It further enables the garden care vehicle to use in the second navigation mode the sensor for detecting the position of the water supply station as well as the sensor for detecting and following the guide wire.

According to another advantageous embodiment, the position marking element comprises at least one no active signal emitting element, in particular comprising a ferromagnetic material, preferably a permanent magnet, or in particular comprising at least one metallic element causing variations in a magnetic field, preferably an iron body, or comprises at least one active signal emitting element, in particular a signal emitter emitting an electrical or optical or magnetic signal, preferably wherein the signal emitter is supplied with electrical energy by a solar panel electrically coupled with the water supply station.

These elements are adapted to specific sensors that may be used on an associated garden care vehicle. It shall be understood that a permanent magnet or a metallic element causing variations in a magnetic field cause no active signal to be emitted by the position marking element, but the presence of these elements can be perceived by appropriate sensors, such as a Hall-Sensor perceiving a permanent magnet or an electromagnetic sensor perceiving the metallic element. Such elements are advantageous since they do not require a power supply. Signal emitting elements may improve the precision of the position detection by the vehicle.

In a further advantageous embodiment, the water supply station is at least partially arranged in a ground in such way that the water outlet and/or the position marking element is/are arranged substantially at the same level with the surface of the ground.

Thus, it is possible that the garden care vehicle can manoeuver above the water outlet and can navigate into position without being hindered by projecting parts of the water outlet.

Further advantageously, the water supply station comprises a body configured to be arranged at least partially below the surface of the ground and a surround attached to the body and comprising a supporting surface for supporting the water supply station on the surface of the ground, in particular wherein the position marking element is fixedly arranged on the surround and/or wherein the water outlet is arranged centrally on the body, in particular concentrically to the surround, preferably wherein the surround circumferentially surrounds the body.

Thus, a very robust and stable water supply station is provided which is detectable by an adopted garden care vehicle.

The object of the invention is also solved by a system according to claim 13.

In this way, a system of a garden care vehicle and a water supply station is provided that allows very precise and autonomous positioning of the garden care vehicle relative to the water supply station.

According to a further advantageous embodiment, the garden care vehicle, when being in the position relative to the external water outlet of the water supply station in which the at least one coupling element can be coupled to the external water outlet, causes the at least one coupling element to couple with the external water outlet, in particular by causing driving of the coupling element in the coupling direction towards the external water outlet,
or
wherein the garden care vehicle, when being in the position relative to the external water outlet of the water supply station in which the at least one coupling element can be coupled to the external water outlet, communicates with a control unit coupled to the water supply station or directly with the water supply station, wherein, in response to said communication, the external water outlet is caused to couple with the at least one coupling element, in particular by causing driving of the external water outlet in the coupling direction towards the at least one coupling element.

Thus, advantageous automatic coupling is enabled between garden care vehicle and water supply station.

According to a further advantageous embodiment, the garden care vehicle comprises a sensor that is a Hall-Sensor and that the water supply station comprises a position marking element that is a permanent magnet,
or
wherein the garden care vehicle comprises a sensor that is a an electromagnet and wherein the water supply station comprises a position marking element that is a metallic element, in particular an iron body configured to cause a variation in a magnetic field generated by the electromagnet,
   or
wherein the garden care vehicle comprises a sensor that is a signal receiver and wherein the water supply station comprises a position marking element that is a signal emitter emitting an electrical or optical or magnetic signal, in particular wherein the signal emitter is supplied with electrical energy by a solar panel electrically coupled with the water supply station,
   or
wherein the garden care vehicle comprises a sensor that is a camera configured to capture images of the environment surrounding the garden care vehicle that enable the garden care vehicle to navigate in the second navigation mode into the position relative to the external water outlet of the water supply station in which the at least one coupling element can be coupled to the external water outlet.

These configuration describe advantageous combination of sensors and elements to be sensed that are adapted for the use with the garden care vehicle and the water supply station.

### BRIEF DESCRIPTION OF THE DRAWING

The various aspects of the invention, including its particular features and advantages, will be readily understood from the following detailed description and the accompanying drawing, in which:
- Fig. 1: illustrates a perspective view of an example embodiment of an irrigation vehicle and a water supply station according to the invention;
- Fig. 2: illustrates an enlarged perspective view of the rear part of the irrigation vehicle and the water supply station shown in Fig. 1;

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

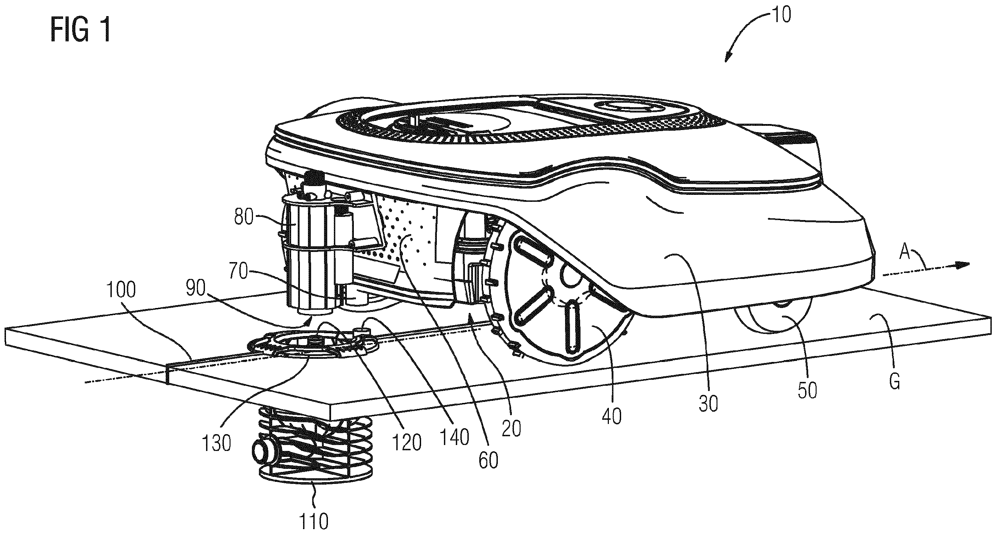

Fig. 1 illustrates a garden care vehicle 10 in the form of a robotic lawn mower. The garden care vehicle 10 comprises one or more watering devices (not shown), such as a nozzle or a sprayer or the like, for selectively watering or irrigating areas in a garden. The garden care vehicle 10 comprises front wheels 50 and rear wheels 40 for driving on a surface of a ground G. Further, the garden care vehicle 10 comprises a chassis 20 to which the front wheels 50 and rear wheels 40 are rotatably mounted and lateral enclosure elements 30 and a rear enclosure element 60. The garden care vehicle 10 further comprises a power supply and one or more motors for driving the front and rear wheels 50, 40.

The garden care vehicle 10 is shown in a position relative to a water supply station 110 in which a coupling element 90 can be coupled to a water outlet 120 of the water supply station 110. The water supply station 110 comprises a cylindrical body that is adapted to be arranged in the ground G and that comprises a water inlet that may be connected to a hose buried in the ground for supplying water to the water supply station 110. More specifically, the water supply station 110 may be a pop-up sprinkler that can be used to irrigate an area around its position or that may be used to supply water to the garden care vehicle 10. Alternatively, the water supply station 10 may be a non-pop up insertion sprinkler or a tap or another suitable type of water supply having a water outlet couplable with the coupling element 90 of the garden care vehicle.

The water supply station 110 may further comprise a surround 130 that is formed to an upper end of the body as a circumferential ring. The surround 130 may have one or more support surfaces for supporting the water supply station 110 on the surface of the ground G. Moreover, the water supply station 110 may comprise a position marking element 140 for marking the position of the water supply station 110 or the water outlet 120. Furthermore, a guide wire 100 is laid on or buried in the ground G, wherein the water supply station 110 is arranged relative to the guide wire 100 such that the guide wire 110 represents a prolongation of a radius of the body or of the surround 130 of the water supply station 110.

On the garden care vehicle 10, a coupling unit 80 is fixedly attached to the rear enclosure element 60, wherein the coupling unit 80 comprises at least one coupling element 90 for coupling the garden care vehicle 10 to the water supply station 110. More specifically, the coupling element 90 may be movable towards the water outlet 120 of the water supply station 110 and to couple with the water outlet 120.

The garden care vehicle 10 is able to navigate freely above the water supply station 110 into a position wherein the coupling element 90 can be coupled with the water outlet 130.

In order to do so, the garden care vehicle 10 is configured to be navigable or to navigate in a first non-autonomous or autonomous navigation mode and to detect a position of the water supply station 110 or the water outlet 120 or a position marking element 140 associated with said external water outlet 120. The first navigation mode may be a navigation mode in which the garden care vehicle 10 is navigated remotely, e.g. by user via a remote control or by a automatic remote control, or the first navigation mode may be an autonomous navigation mode in which the garden care vehicle 10 navigates in dependence one guide wires 100 or any other appropriate sensor device. Also a mixed mode is possible for the first navigation mode.

In response to a detection of the position of the water supply station 110 or the external water outlet 120 or the position marking element 140, the garden care vehicle 10 may navigate in a second autonomous navigation mode, wherein, in the first navigation mode, the garden care vehicle 10 may be configured to be navigated non-autonomously or to navigate autonomously towards the water supply station 110, and wherein, in the second navigation mode, the garden care vehicle 10 may be configured to navigate autonomously into a position relative to the detected position of the water supply station 110 or the external water outlet 120 or the position marking element 140 in which the at least one coupling element 90 can be coupled to the external water outlet 120.

The garden care vehicle 10 may comprise at least one first navigation assistance device, wherein the garden care vehicle 10 navigates in the first navigation mode in dependence on the at least one first navigation assistance device, e.g. dependent on a sensor for detecting guide wires 100 and/or a sensor for detecting obstacles and/or a sensor, in particular a GPS sensor, for detecting the position of the garden care vehicle 10 within an area of operation. Additionally or alternatively, the garden care vehicle 10 may comprise at least one second navigation assistance device, wherein the garden care vehicle 10 navigates in the second autonomous navigation mode in dependence on the at least one second navigation assistance device, e.g. including a sensor (70) that is a Hall-Sensor or a magnetic sensor or an optical sensor or a camera.

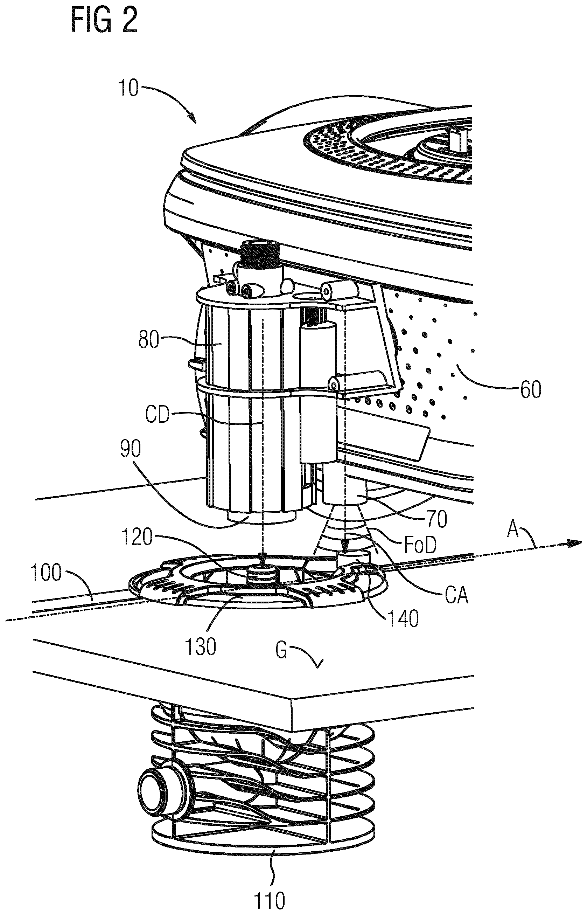

Fig. 2 illustrates an enlarged perspective view of the rear part of the irrigation vehicle and the water supply station shown in Fig. 1. The coupling element 90 is arranged at an outer perimeter at the rear side of the garden care vehicle 10 and the at least one sensor 70 of the sensor unit is arranged on a lower rear side of the chassis 20 adjacent to the at least one coupling element 90.

The coupling element 90 and the sensor 70 are arranged outside of an area between the wheels 40, 50 of the garden care vehicle 10. The coupling element 90 and the sensor 70 are arranged are further arranged on a line parallel to a central longitudinal axis A of the garden care vehicle 10, wherein the central longitudinal axis A corresponds to a forward and rearward straight ahead driving direction of the garden care vehicle 10.

The sensor 70 has a preferred field of detection FoD, wherein it may be fixed on the chassis or on the enclosure elements 30, 60 in such way that the preferred field of detection FoD is directed substantially in the same direction in which the at least one coupling element 90 can be coupled to the external water outlet 120. More specifically, the central axis CA of the preferred field of detection FoD may be arranged parallel to a movement direction CD of the at least one coupling element 90 for coupling to the external water outlet 120.

### LIST OF REFERENCE NUMERALS

- 10: Garden care vehicle
- 20: Chassis
- 30: Lateral enclosure element
- 40: Rear wheel
- 50: Front wheel
- 60: Rear enclosure element
- 70: Sensor
- 80: Coupling unit
- 90: Coupling element
- 100: Guide wire
- 110: Water supply station
- 120: External water outlet
- 130: Surround
- 140: Position marking element

- A: Central longitudinal axis
- CD: Coupling direction of coupling element
- G: Ground
- FoD: Field of detection
- CA: Central axis of field of detection

## Claims

1. Garden care vehicle (10) comprising a chassis (20) and/ or enclosure elements (30,60) and at least one watering
device, wherein the at least one watering device comprises at least one coupling element (90) for coupling the at least one watering device to an external water outlet (120) of a water supply station (110) for supplying the watering device with water, wherein the at least one coupling element (90) is arranged in a fixed position on the chassis (20) and/or on the enclosure elements (30, 60),
wherein the garden care vehicle (10) is configured to be navigable or to navigate in a first non-autonomous or autonomous navigation mode and to detect a position of the water supply station (110) or the external water outlet (120) or a position marking element (140) associated with said external water outlet (120), and, in response to a detection of the position of the water supply station (110) or the external water outlet (120) or the position marking element (140), to navigate in a second autonomous navigation mode, wherein, in the first navigation mode the garden care vehicle (10) is configured to be navigated non-autonomously or to navigate autonomously towards the water supply station (110), and
wherein, in the second navigation mode, the garden care vehicle (10) is configured to navigate autonomously into a position relative to the detected position of the water supply station (110) or the external water outlet (120) or the position marking element (140) in which the at least one coupling element (90) can be coupled to the external water outlet (120);
**characterized in that:**
the garden care vehicle (10) comprises at least one second navigation assistance device, wherein the garden care vehicle (10) is configured to navigate in the second autonomous navigation mode in dependence on the at least one second navigation assistance device;
wherein the second navigation assistance device comprises a sensor unit for detecting the position of the external water outlet (120), wherein the sensor unit includes a sensor (70), wherein the sensor (70) is arranged in a fixed position on the chassis (20) and/or on the enclosure elements (30, 60), wherein the sensor (70)has a preferred field of detection (FoD), wherein the sensor (70) is fixed on the chassis (20) and/or the enclosure elements (30, 60) in such way that the preferred field of detection (FoD) is directed substantially in the same direction in which the at least one coupling element (90) can be coupled to the external water outlet (120).

2. Garden care vehicle (10) according to claim 1, **characterized in that** the garden care vehicle (10) comprises at least one first navigation assistance device, wherein the garden care vehicle (10) is configured to navigate in the first navigation mode in dependence on the at least one first navigation assistance device and in that the garden care vehicle (10) is configured to navigate in the second autonomous navigation mode in dependence on the at least one first navigation device and the at least one second navigation device.

3. Garden care vehicle (10) according to claim 2, **characterized in that** the first navigation assistance device comprises a sensor for detecting guide wires (100) and/or a sensor for detecting obstacles and/or a sensor, in particular a GPS sensor, for detecting the position of the garden care vehicle (10) within an area of operation,
and/or in particular wherein the sensor (70) is a Hall-Sensor or a magnetic sensor or an optical sensor or a camera.

4. Garden care vehicle (10) according to any one of the preceding claims, **characterized in that** the at least one coupling element (90) is releasable from the fixed position on the chassis (20) and/or the enclosure elements (30, 60) in response to the garden care vehicle (10) reaching the position relative to the external water outlet (120) in which the at least one coupling element (90) can be coupled to the external water outlet (120), preferably wherein the at least one coupling element (90) can be coupled to the external water outlet (120) by a movement of the at least one coupling element (90) in a coupling direction (CD), optionally wherein the coupling direction (CD) is substantially perpendicular to a central longitudinal axis (A) of the garden care vehicle (10).

5. Garden care vehicle (10) according to any one of the preceding claims, **characterized in that** the sensor (70) for detecting the position of the external water outlet (120) is arranged at a fixed distance to the fixed position of the at least one coupling element (90).

6. Garden care vehicle (10) according to any one of the preceding claims, **characterized in that** the at least one coupling element (90) is arranged at an outer perimeter of the garden care vehicle (10) and the at least one sensor (70) of the sensor unit is arranged on the chassis (20) and/or on the enclosure elements (30, 60) adjacent to the at least one coupling element (90),
and/or wherein the at least one coupling element (90) and at least the sensor (70) of the sensor unit are arranged outside of an area between the wheels (40, 50) of the garden care vehicle (10),
and/or wherein the at least one coupling element (90) and at least the sensor (70) of the sensor unit are arranged on or adjacent to a rear side or on or adjacent to a front side of the garden care vehicle (10),
and/or wherein the at least one coupling element (90) and at least the sensor (70) of the sensor unit are arranged on a line parallel to or matching with a central longitudinal axis (A) of the garden care vehicle (10), in particular wherein the central longitudinal axis (A) corresponds to a forward and rearward straight ahead driving direction of the garden care vehicle (10).

7. Garden care vehicle (10) according to any one of the preceding claims, **characterized in that** a central axis (CA) of the preferred field of detection (FoD) is parallel to a movement direction (CD) of the at least one coupling element (90) for coupling to the external water outlet (120).

8. Garden care vehicle (10) according to any one of the preceding claims, **characterized in that**
- a coupling unit (80) is arranged in a fixed position on the chassis (20) and/or on the enclosure elements (30, 60),
- the coupling unit (80) comprises the at least one coupling element (90) for coupling the garden care vehicle (10) to the water supply station (110), in particular to the external water outlet (120) of the water supply station (110),
- the at least one coupling element (90) is configured to be coupled to the external water outlet (120) by a movement of the at least one coupling element (90) in a coupling direction (CD), in particular wherein the coupling direction (CD) is substantially perpendicular to a central longitudinal axis (A) of the garden care vehicle (10), and/or
- in particular, the garden care vehicle (10) is configured to navigate freely above the water supply station (110), more in particular above the external water outlet (120) of the water supply station (110), into a position wherein the coupling element (90) can be coupled with the external water outlet (120).

9. Garden care vehicle (10) according to any one of the preceding claims, **characterized in that**
- the garden care vehicle (10) comprises at least one first navigation assistance device, wherein the garden care vehicle (10) is configured to navigate in the first navigation mode in dependence on the at least one first navigation assistance device, wherein the first navigation assistance device comprises a sensor for detecting the position of the garden care vehicle (10) within an area of operation

10. Water supply station (110), in particular including a tap or a pop-up sprinkler or an insertion sprinkler, comprising a water outlet (120), **characterized in that** the water supply station (110) further comprises at least one position marking element (140) directly attached to the water supply station (110) and configured to be detectable by the sensor (70) for detecting the position of the position marking element (140) of the sensor unit of the garden care vehicle according to any one of the claims 1 to 9, when approaching the position marking element (140).

11. Water supply station (110) according to claim 10, **characterized in that** the position marking element (140) is arranged in a fixed distance to the water outlet (120), in particular wherein the water supply station (110) further comprises or is arranged close to a guide wire (100) configured for guiding a garden care vehicle (10), preferably in a first navigation mode of a garden care vehicle (10) according to any one of the claims 1 to 9, towards the water supply station (110), wherein at least a part of the guide wire (100) that is adjacent to the water supply station (110), the position marking element (140) and the water outlet (120) are arranged in the same vertical plane.

12. Water supply station (110) according to claim 10 or 11, **characterized in that** the position marking element (140) comprises at least one no active signal emitting element, in particular comprising a ferromagnetic material, preferably a permanent magnet, or in particular comprising at least one metallic element causing variations in a magnetic field, preferably an iron body, or comprises at least one active signal emitting element, in particular a signal emitter emitting an electrical or optical or magnetic signal, preferably wherein the signal emitter is supplied with electrical energy by a solar panel electrically coupled with the water supply station (110).

13. System comprising a garden care vehicle (10) according to any of the claims 1 to 9, and a water supply station (110) according to any of the claims 10 to 12, wherein the at least one coupling element (90) and the sensor (70) are arranged on the garden care vehicle (10) at a height above ground (G) that is adapted to a height above ground (G) of the water outlet (120) and/or of a position marking element (140) attached to the water supply station (110), such that the sensor (70) is able to detect the water supply station (110) or the water outlet (120) or the position marking element (140) when being moved in proximity to or over the water supply station (110) or the water outlet (120) or the position marking element (140) and/or such that the at least one coupling element (90) is brought into a position that enables coupling of the coupling element (90) with the water outlet (120) by moving it towards the water outlet (120).

14. System according to claim 13, **characterized in that** the garden care vehicle (10), when being in the position relative to the external water outlet (120) of the water supply station (110) in which the at least one coupling element (90) can be coupled to the external water outlet (120), causes the at least one coupling element (90) to couple with the external water outlet (120), in particular by causing driving of the coupling element (90) in the coupling direction (CD) towards the external water outlet (120),
or
wherein the garden care vehicle (10), when being in the position relative to the external water outlet (120) of the water supply station (110) in which the at least one coupling element (90) can be coupled to the external water outlet (120), communicates with a control unit coupled to the water supply station (110) or directly with the water supply station (110), wherein, in response to said communication, the external water outlet (120) is caused to couple with the at least one coupling element (90), in particular by causing driving of the external water outlet (120) in the coupling direction (CD) towards the at least one coupling element (90).

15. System according to claim 13 or 14, **characterized in that** the sensor (70) is a Hall-Sensor and that the position marking element (140) is a permanent magnet, or wherein the sensor (70; is a an electromagnet and wherein the position marking element (140) is a metallic element, in particular an iron body configured to cause a variation in a magnetic field generated by the electromagnet, or wherein the sensor (70) is a signal receiver and wherein the position marking element (140) is a signal emitter emitting an electrical or optical or magnetic signal, in particular wherein the signal emitter is supplied with electrical energy by a solar panel electrically coupled with the water supply station (110), or wherein the sensor (70) is a camera configured to capture images of the environment surrounding the garden care vehicle (10) that enable the garden care vehicle to navigate in the second navigation mode into the position relative to the external water outlet (120) of the water supply station (110) in which the at least one coupling element (90) can be coupled to the external water outlet (120).

## Patentansprüche

1. Gartenpflegefahrzeug (10), umfassend ein Fahrgestell (20) und/oder Einhausungselemente (30, 60) und mindestens eine Bewässerungsvorrichtung, wobei die mindestens eine Bewässerungsvorrichtung mindestens ein Kopplungselement (90) zum Koppeln der mindestens einen Bewässerungsvorrichtung an einen externen Wasserauslass (120) einer Wasserversorgungsstation (110) zum Versorgen der Bewässerungsvorrichtung mit Wasser umfasst, wobei das mindestens eine Kopplungselement (90) in einer festen Position am Fahrgestell (20) und/oder auf den Einhausungselementen (30, 60) angeordnet ist,
wobei das Gartenpflegefahrzeug (10) konfiguriert ist, um in einem ersten nicht-autonomen oder autonomen Navigationsmodus navigierbar zu sein oder zu navigieren und eine Position der Wasserversorgungsstation (110) oder des externen Wasserauslasses (120) oder eines mit dem externen Wasserauslass (120) verbundenen Positionsmarkierungselements (140) zu erfassen und als Reaktion auf eine Erfassung der Position der Wasserversorgungsstation (110) oder des externen Wasserauslasses (120) oder des Positionsmarkierungselements (140) in einem zweiten autonomen Navigationsmodus zu navigieren, wobei das Gartenpflegefahrzeug (10) im ersten Navigationsmodus konfiguriert ist, um nicht-autonom navigierbar zu sein oder um autonom in Richtung der Wasserversorgungsstation (110) zu navigieren, und wobei das Gartenpflegefahrzeug (10) im zweiten Navigationsmodus konfiguriert ist, um autonom in eine Position relativ zu der erfassten Position der Wasserversorgungsstation (110) oder des externen Wasserauslasses (120) oder des Positionsmarkierungselements (140) zu navigieren, in der das mindestens eine Kopplungselement (90) mit dem externen Wasserauslass (120) gekoppelt werden kann,
**dadurch gekennzeichnet, dass:**
das Gartenpflegefahrzeug (10) mindestens eine zweite Navigationsassistenzvorrichtung umfasst, wobei das Gartenpflegefahrzeug (10) konfiguriert ist, um in dem zweiten autonomen Navigationsmodus in Abhängigkeit von der mindestens einen zweiten Navigationsassistenzvorrichtung zu navigieren;
wobei die zweite Navigationsassistenzvorrichtung eine Sensoreinheit zum Erfassen der Position des externen Wasserauslasses (120) umfasst, wobei die Sensoreinheit einen Sensor (70) einschließt, wobei der Sensor (70) in einer festen Position am Fahrgestell (20) und/oder auf den Einhausungselementen (30, 60) angeordnet ist, wobei der Sensor (70) ein bevorzugtes Erfassungsfeld (FoD) aufweist, wobei der Sensor (70) derart am Chassis (20) und/oder auf den Einhausungselementen (30, 60) befestigt ist, dass das bevorzugte Erfassungsfeld (FoD) im Wesentlichen in die gleiche Richtung gerichtet ist, in der das mindestens eine Kopplungselement (90) mit dem externen Wasserauslass (120) gekoppelt werden kann.

2. Gartenpflegefahrzeug (10) nach Anspruch 1,
**dadurch gekennzeichnet, dass** das Gartenpflegefahrzeug (10) mindestens eine erste Navigationsassistenzvorrichtung umfasst, wobei das Gartenpflegefahrzeug (10) konfiguriert ist, um in dem ersten Navigationsmodus in Abhängigkeit von der mindestens einen ersten Navigationsassistenzvorrichtung zu navigieren
und
**dadurch, dass** das Gartenpflegefahrzeug (10) konfiguriert ist, um im zweiten autonomen Navigationsmodus in Abhängigkeit von der mindestens einen ersten Navigationsvorrichtung und der mindestens einen zweiten Navigationsvorrichtung zu navigieren.

3. Gartenpflegefahrzeug (10) nach Anspruch 2,
**dadurch gekennzeichnet, dass** die erste Navigationsassistenzeinrichtung einen Sensor zum Erkennen von Leitdrähten (100) und/oder einen Sensor zum Erkennen von Hindernissen und/oder einen Sensor, insbesondere einen GPS-Sensor, zum Erkennen der Position des Gartenpflegefahrzeugs (10) innerhalb einer Arbeitsfläche umfasst,
und/oder
wobei insbesondere
der Sensor (70) ein Hall-Sensor oder ein Magnetsensor oder ein optischer Sensor oder eine Kamera ist.

4. Gartenpflegefahrzeug (10) nach einem der vorstehenden Ansprüche, **dadurch gekennzeichnet, dass** das mindestens eine Kopplungselement (90) aus der festen Position am Fahrgestell (20) und/oder den Einhausungselementen (30, 60) als Reaktion darauf lösbar ist, dass das Gartenpflegefahrzeug (10) die Position relativ zum externen Wasserauslass (120) erreicht, in der das mindestens eine Kopplungselement (90) mit dem externen Wasserauslass (120) gekoppelt werden kann, wobei vorzugsweise das mindestens eine Kopplungselement (90) durch eine Bewegung des mindestens einen Kopplungselements (90) in einer Kopplungsrichtung (CD) mit dem externen Wasserauslass (120) gekoppelt werden kann, wobei optional die Kopplungsrichtung (CD) im Wesentlichen senkrecht zu einer zentralen Längsachse (A) des Gartenpflegefahrzeugs (10) verläuft.

5. Gartenpflegefahrzeug (10) nach einem der vorstehenden Ansprüche, **dadurch gekennzeichnet, dass** der Sensor (70) zum Erfassen der Position des externen Wasserauslasses (120) in einem festen Abstand zur festen Position des mindestens einen Kopplungselements (90) angeordnet ist.

6. Gartenpflegefahrzeug (10) nach einem der vorstehenden Ansprüche, **dadurch gekennzeichnet, dass** das mindestens eine Kopplungselement (90) an einem äußeren Umfang des Gartenpflegefahrzeugs (10) angeordnet ist und der mindestens eine Sensor (70) der Sensoreinheit am Fahrgestell (20) und/oder an den Einhausungselementen (30, 60) benachbart zu dem mindestens einen Kopplungselement (90) angeordnet ist, und/oder wobei das mindestens eine Kopplungselement (90) und mindestens der Sensor (70) der Sensoreinheit außerhalb einer Fläche zwischen den Rädern (40, 50) des Gartenpflegefahrzeugs (10) angeordnet sind,
und/oder wobei das mindestens eine Kopplungselement (90) und mindestens der Sensor (70) der Sensoreinheit an oder benachbart zu einer Rückseite oder an oder benachbart zu einer Vorderseite des Gartenpflegefahrzeugs (10) angeordnet sind,
und/oder wobei das mindestens eine Kopplungselement (90) und mindestens der Sensor (70) der Sensoreinheit auf einer Linie parallel zu einer Mittellängsachse (A) des Gartenpflegefahrzeugs (10) angeordnet sind oder damit übereinstimmen, wobei insbesondere die Mittellängsachse (A) einer vorwärts und rückwärts gerichteten Geradeaus-Fahrtrichtung des Gartenpflegefahrzeugs (10) entspricht.

7. Gartenpflegefahrzeug (10) nach einem der vorstehenden Ansprüche, **dadurch gekennzeichnet, dass** eine Mittelachse (CA) des bevorzugten Erfassungsfelds (FoD) parallel zu einer Bewegungsrichtung (CD) des mindestens einen Kopplungselements (90) zum Koppeln mit dem externen Wasserauslass (120) ist.

8. Gartenpflegefahrzeug (10) nach einem der vorstehenden Ansprüche, **dadurch gekennzeichnet, dass**
- eine Kopplungseinheit (80) in einer festen Position am Fahrgestell (20) und/oder auf den Einhausungselementen (30, 60) angeordnet ist,
- die Kopplungseinheit (80) das mindestens eine Kopplungselement (90) zum Koppeln des Gartenpflegefahrzeugs (10) an die Wasserversorgungsstation (110) umfasst, insbesondere an den externen Wasserauslass (120) der Wasserversorgungsstation (110),
- das mindestens eine Kopplungselement (90) konfiguriert ist, um durch eine Bewegung des mindestens einen Kopplungselements (90) in einer Kopplungsrichtung (CD) mit dem externen Wasserauslass (120) gekoppelt zu werden, wobei insbesondere die Kopplungsrichtung (CD) im Wesentlichen senkrecht zu einer Mittellängsachse (A) des Gartenpflegefahrzeugs (10) verläuft, und/oder
- insbesondere das Gartenpflegefahrzeug (10) konfiguriert ist, um frei über der Wasserversorgungsstation (110), insbesondere über dem externen Wasserauslass (120) der Wasserversorgungsstation (110), in eine Position zu navigieren, in der das Kopplungselement (90) mit dem externen Wasserauslass (120) gekoppelt werden kann.

9. Gartenpflegefahrzeug (10) nach einem der vorstehenden Ansprüche, **dadurch gekennzeichnet, dass**
- das Gartenpflegefahrzeug (10) mindestens eine erste Navigationsassistenzvorrichtung umfasst, wobei das Gartenpflegefahrzeug (10) konfiguriert ist, um in Abhängigkeit von der mindestens einen ersten Navigationsassistenzvorrichtung im ersten Navigationsmodus zu navigieren, wobei die erste Navigationsassistenzvorrichtung einen Sensor zum Erfassen der Position des Gartenpflegefahrzeugs (10) innerhalb einer Arbeitsfläche umfasst.

10. Wasserversorgungsstation (110), insbesondere einschließend einen Wasserhahn oder einen Versenkregner oder einen Einsteckregner, umfassend einen Wasserauslass (120), **dadurch gekennzeichnet, dass** die Wasserversorgungsstation (110) ferner mindestens ein Positionsmarkierungselement (140) umfasst, das direkt an der Wasserversorgungsstation (110) angebracht ist und konfiguriert ist, um zum Erfassen der Position des Positionsmarkierungselements (140) der Sensoreinheit des Gartenpflegefahrzeugs gemäß einem der Ansprüche 1 bis 9 bei Annäherung an das Positionsmarkierungselement (140) durch den Sensor (70) erkennbar ist.

11. Wasserversorgungsstation (110) nach Anspruch 10,
**dadurch gekennzeichnet, dass** das Positionsmarkierungselement (140) in einem festen Abstand zum Wasserauslass (120) angeordnet ist, wobei insbesondere die Wasserversorgungsstation (110) ferner einen Leitdraht (100) umfasst oder in der Nähe davon angeordnet ist, der konfiguriert ist, um ein Gartenpflegefahrzeug (10), vorzugsweise in einem ersten Navigationsmodus eines Gartenpflegefahrzeugs (10) gemäß einem der Ansprüche 1 bis 9, in Richtung der Wasserversorgungsstation (110) zu führen, wobei mindestens ein Teil des Leitdrahts (100), der an die Wasserversorgungsstation (110) grenzt, das Positionsmarkierungselement (140) und der Wasserauslass (120) in derselben vertikalen Ebene angeordnet sind.

12. Wasserversorgungsstation (110) nach Anspruch 10 oder 11, **dadurch gekennzeichnet, dass** das Positionsmarkierungselement (140) mindestens ein nicht aktives Signalausgabeelement, insbesondere umfassend ein ferromagnetisches Material, vorzugsweise einen Permanentmagneten, oder insbesondere umfassend mindestens ein magnetische Feldvariationen hervorrufendes metallisches Element, vorzugsweise einen Eisenkörper, oder mindestens ein aktives Signalausgabeelement umfasst, insbesondere einen ein elektrisches oder optisches oder magnetisches Signal ausgebenden Signalgeber, wobei vorzugsweise der Signalgeber von einem mit der Wasserversorgungsstation (110) elektrisch gekoppelten Solarpanel mit elektrischer Energie versorgt wird.

13. System, umfassend ein Gartenpflegefahrzeug (10) nach einem der Ansprüche 1 bis 9 und eine Wasserversorgungsstation (110) nach einem der Ansprüche 10 bis 12,
wobei das mindestens eine Kopplungselement (90) und der Sensor (70) in einer Höhe über dem Boden (G) an dem Gartenpflegefahrzeug (10) angeordnet sind, die an eine Höhe über dem Boden (G) des Wasserauslasses (120) und/oder eines an der Wasserversorgungsstation (110) angebrachten Positionsmarkierungselements (140) angepasst ist, so dass der Sensor (70) in der Lage ist, die Wasserversorgungsstation (110) oder den Wasserauslass (120) oder das Positionsmarkierungselement (140) zu erfassen, wenn er in die Nähe oder über die Wasserversorgungsstation (110) oder den Wasserauslass (120) oder das Positionsmarkierungselement (140) bewegt wird, und/oder so dass das mindestens eine Kopplungselement (90) durch Bewegen in Richtung des Wasserauslasses (120) in eine Position gebracht wird, die das Koppeln des Kopplungselements (90) mit dem Wasserauslass (120) ermöglicht.

14. System nach Anspruch 13, **dadurch gekennzeichnet, dass** das Gartenpflegefahrzeug (10) in der Position relativ zum externen Wasserauslass (120) der Wasserversorgungsstation (110), in der das mindestens eine Kopplungselement (90) mit dem externen Wasserauslass (120) gekoppelt werden kann, eine Kopplung des mindestens einen Kopplungselements (90) mit dem externen Wasserauslass (120) bewirkt, insbesondere durch Bewirken eines Antriebs des Kopplungselements (90) in der Kopplungsrichtung (CD) in Richtung des externen Wasserauslasses (120),
oder
wobei das Gartenpflegefahrzeug (10) in der Position relativ zum externen Wasserauslass (120) der Wasserversorgungsstation (110), in der das mindestens eine Kopplungselement (90) mit dem externen Wasserauslass (120) gekoppelt werden kann, mit einer Steuereinheit kommuniziert, die mit der Wasserversorgungsstation (110) oder direkt mit der Wasserversorgungsstation (110) gekoppelt ist, wobei als Reaktion auf die Kommunikation der externe Wasserauslass (120) veranlasst wird, mit dem mindestens einen Kopplungselement (90) zu koppeln, insbesondere durch Veranlassen eines Antriebs des externen Wasserauslasses (120) in der Kopplungsrichtung (CD) in Richtung des mindestens einen Kopplungselements (90).

15. System nach Anspruch 13 oder 14, **dadurch gekennzeichnet, dass** der Sensor (70) ein Hall-Sensor ist und dass das Positionsmarkierungselement (140) ein Permanentmagnet ist,
oder
wobei der Sensor (70) ein Elektromagnet ist und wobei das Positionsmarkierungselement (140) ein metallisches Element, insbesondere ein Eisenkörper, ist, der konfiguriert ist, um eine Veränderung eines von dem Elektromagneten erzeugten Magnetfelds hervorzurufen,
oder
wobei der Sensor (70) ein Signalempfänger ist und wobei das Positionsmarkierungselement (140) ein Signalgeber ist, der ein elektrisches oder optisches oder magnetisches Signal ausgibt, wobei insbesondere der Signalgeber von einem mit der Wasserversorgungsstation (110) elektrisch gekoppelten Solarpanel mit elektrischer Energie versorgt wird,
oder
wobei der Sensor (70) eine Kamera ist, die konfiguriert ist, um Bilder der Umgebung des Gartenpflegefahrzeugs (10) aufzunehmen, die es dem Gartenpflegefahrzeug ermöglichen, im zweiten Navigationsmodus in die Position relativ zum externen Wasserauslass (120) der Wasserversorgungsstation (110) zu navigieren, in der das mindestens eine Kopplungselement (90) mit dem externen Wasserauslass (120) gekoppelt werden kann.

## Revendications

1. Véhicule d'entretien de jardin (10) comprenant un châssis (20) et/ou des éléments d'enceinte (30, 60) et au moins un dispositif d'arrosage, dans lequel l'au moins un dispositif d'arrosage comprend au moins un élément d'accouplement (90) pour accoupler l'au moins un dispositif d'arrosage à une sortie d'eau externe (120) d'une station d'approvisionnement en eau (110) pour approvisionner le dispositif d'arrosage en eau, dans lequel l'au moins un élément d'accouplement (90) est disposé dans une position fixe sur le châssis (20) et/ou sur les éléments d'enceinte (30, 60),
dans lequel le véhicule d'entretien de jardin (10) est configuré pour être navigable ou pour naviguer dans un premier mode de navigation non autonome ou autonome et pour détecter une position de la station d'approvisionnement en eau (110) ou de la sortie d'eau externe (120) ou d'un élément de marquage de position (140) associé à ladite sortie d'eau externe (120), et, en réponse à une détection de la position de la station d'approvisionnement en eau (110) ou de la sortie d'eau externe (120) ou de l'élément de marquage de position (140), pour naviguer dans un second mode de navigation autonome, dans lequel, dans le premier mode de navigation, le véhicule d'entretien de jardin (10) est configuré pour être navigué de manière non autonome ou pour naviguer de manière autonome vers la station d'approvisionnement en eau (110), et dans lequel, dans le second mode de navigation, le véhicule d'entretien de jardin (10) est configuré pour naviguer de manière autonome dans une position relative à la position détectée de la station d'approvisionnement en eau (110) ou de la sortie d'eau externe (120) ou de l'élément de marquage de position (140) dans laquelle l'au moins un élément d'accouplement (90) peut être accouplé à la sortie d'eau externe (120) ;
**caractérisé en ce que :**
le véhicule d'entretien de jardin (10) comprend au moins un second dispositif d'aide à la navigation, dans lequel le véhicule d'entretien de jardin (10) est configuré pour naviguer dans le second mode de navigation autonome en fonction de l'au moins un second dispositif d'aide à la navigation ;
dans lequel le second dispositif d'aide à la navigation comprend une unité de détection pour détecter la position de la sortie d'eau externe (120), dans lequel l'unité de détection comporte un capteur (70), dans lequel le capteur (70) est disposé dans une position fixe sur le châssis (20) et/ou sur les éléments d'enceinte (30, 60), dans lequel le capteur (70) a un champ de détection (FoD) préféré, dans lequel le capteur (70) est fixé sur le châssis (20) et/ou sur les éléments d'enceinte (30, 60) de telle sorte que le champ de détection (FoD) préféré est dirigé sensiblement dans la même direction que celle dans laquelle l'au moins un élément d'accouplement (90) peut être accouplé à la sortie d'eau externe (120).

2. Véhicule d'entretien de jardin (10) selon la revendication 1, **caractérisé en ce que** le véhicule d'entretien de jardin (10) comprend au moins un premier dispositif d'aide à la navigation, dans lequel le véhicule d'entretien de jardin (10) est configuré pour naviguer dans le premier mode de navigation en fonction de l'au moins un premier dispositif d'aide à la navigation
et
**en ce que** le véhicule d'entretien de jardin (10) est configuré pour naviguer dans le second mode de navigation autonome en fonction de l'au moins un premier dispositif de navigation et de l'au moins un second dispositif de navigation.

3. Véhicule d'entretien de jardin (10) selon la revendication 2, **caractérisé en ce que** le premier dispositif d'aide à la navigation comprend un capteur pour détecter des fils de guidage (100) et/ou un capteur pour détecter des obstacles et/ou un capteur, en particulier un capteur GPS, pour détecter la position du véhicule d'entretien de jardin (10) dans une zone d'opération,
et/ou
en particulier dans lequel
le capteur (70) est un capteur à effet Hall ou un capteur magnétique ou un capteur optique ou une caméra.

4. Véhicule d'entretien de jardin (10) selon l'une quelconque des revendications précédentes, **caractérisé en ce que** l'au moins un élément d'accouplement (90) peut être libéré de la position fixe sur le châssis (20) et/ou sur les éléments d'enceinte (30, 60) en réponse au véhicule d'entretien de jardin (10) atteignant la position par rapport à la sortie d'eau externe (120) dans laquelle l'au moins un élément d'accouplement (90) peut être accouplé à la sortie d'eau externe (120), de préférence, dans lequel l'au moins un élément d'accouplement (90) peut être accouplé à la sortie d'eau externe (120) par un mouvement de l'au moins un élément d'accouplement (90) dans une direction d'accouplement (CD), éventuellement dans lequel la direction d'accouplement (CD) est sensiblement perpendiculaire à un axe longitudinal central (A) du véhicule d'entretien de jardin (10).

5. Véhicule d'entretien de jardin (10) selon l'une quelconque des revendications précédentes, **caractérisé en ce que** le capteur (70) pour détecter la position de la sortie d'eau externe (120) est disposé à une distance fixe de la position fixe de l'au moins un élément d'accouplement (90).

6. Véhicule d'entretien de jardin (10) selon l'une quelconque des revendications précédentes, **caractérisé en ce que** l'au moins un élément d'accouplement (90) est disposé sur un périmètre externe du véhicule d'entretien de jardin (10) et l'au moins un capteur (70) de l'unité de capteur est disposé sur le châssis (20) et/ou sur les éléments d'enceinte (30, 60) à proximité de l'au moins un élément d'accouplement (90), et/ou dans lequel l'au moins un élément d'accouplement (90) et au moins le capteur (70) de l'unité de capteur sont disposés à l'extérieur d'une zone située entre les roues (40, 50) du véhicule d'entretien de jardin (10),
et/ou dans lequel l'au moins un élément d'accouplement (90) et au moins le capteur (70) de l'unité de capteur sont disposés sur un côté arrière ou à proximité de celui-ci ou sur un côté avant ou à proximité de celui-ci du véhicule d'entretien de jardin (10),
et/ou dans lequel l'au moins un élément d'accouplement (90) et au moins le capteur (70) de l'unité de capteur sont disposés sur une ligne parallèle ou correspondant à un axe longitudinal central (A) du véhicule d'entretien de jardin (10), en particulier dans lequel l'axe longitudinal central (A) correspond à une direction de conduite avant et arrière en ligne droite du véhicule d'entretien de jardin (10).

7. Véhicule d'entretien de jardin (10) selon l'une quelconque des revendications précédentes, **caractérisé en ce qu**'un axe central (CA) du champ de détection (FoD) préféré est parallèle à une direction de mouvement (CD) de l'au moins un élément d'accouplement (90) pour l'accouplement à la sortie d'eau externe (120).

8. Véhicule d'entretien de jardin (10) selon l'une quelconque des revendications précédentes, **caractérisé en ce que**
- une unité d'accouplement (80) est disposée en position fixe sur le châssis (20) et/ou sur les éléments d'enceinte (30, 60),
- l'unité d'accouplement (80) comprend l'au moins un élément d'accouplement (90) pour accoupler le véhicule d'entretien de jardin (10) à la station d'approvisionnement en eau (110), en particulier à la sortie d'eau externe (120) de la station d'approvisionnement en eau (110),
- l'au moins un élément d'accouplement (90) est conçu pour être accouplé à la sortie d'eau externe (120) par un mouvement de l'au moins un élément d'accouplement (90) dans une direction d'accouplement (CD), en particulier dans lequel la direction d'accouplement (CD) est sensiblement perpendiculaire à un axe longitudinal central (A) du véhicule d'entretien de jardin (10), et/ou
- en particulier, le véhicule d'entretien de jardin (10) est configuré pour naviguer librement au-dessus de la station d'approvisionnement en eau (110), plus particulièrement au-dessus de la sortie d'eau externe (120) de la station d'approvisionnement en eau (110), dans une position dans laquelle l'élément d'accouplement (90) peut être accouplé à la sortie d'eau externe (120).

9. Véhicule d'entretien de jardin (10) selon l'une quelconque des revendications précédentes, **caractérisé en ce que**
- le véhicule d'entretien de jardin (10) comprend au moins un premier dispositif d'aide à la navigation, dans lequel le véhicule d'entretien de jardin (10) est configuré pour naviguer dans le premier mode de navigation en fonction de l'au moins un premier dispositif d'aide à la navigation, dans lequel le premier dispositif d'aide à la navigation comprend un capteur pour détecter la position du véhicule d'entretien de jardin (10) dans une zone d'opération.

10. Station d'approvisionnement en eau (110), comportant en particulier un robinet ou un arroseur escamotable ou un arroseur à insertion, comprenant une sortie d'eau (120), **caractérisée en ce que** la station d'approvisionnement en eau (110) comprend en outre au moins un élément de marquage de position (140) directement attaché à la station d'approvisionnement en eau (110) et configuré pour être détectable par le capteur (70) pour détecter la position de l'élément de marquage de position (140) de l'unité de capteur du véhicule d'entretien de jardin selon l'une quelconque des revendications 1 à 9, lors de l'approche de l'élément de marquage de position (140).

11. Station d'approvisionnement en eau (110) selon la revendication 10, **caractérisée en ce que** l'élément de marquage de position (140) est disposé à une distance fixe de la sortie d'eau (120), en particulier dans laquelle la station d'approvisionnement en eau (110) comprend en outre un fil de guidage (100), ou est disposée à proximité de celui-ci, conçu pour guider un véhicule d'entretien de jardin (10), de préférence dans un premier mode de navigation d'un véhicule d'entretien de jardin (10) selon l'une quelconque des revendications 1 à 9, vers la station d'approvisionnement en eau (110), dans laquelle au moins une partie du fil de guidage (100) qui est à proximité de la station d'approvisionnement en eau (110), l'élément de marquage de position (140) et la sortie d'eau (120) sont disposés dans le même plan vertical.

12. Station d'approvisionnement en eau (110) selon la revendication 10 ou 11, **caractérisée en ce que** l'élément de marquage de position (140) comprend au moins un élément d'émission de signal non actif, en particulier comprenant un matériau ferromagnétique, de préférence un aimant permanent, ou en particulier comprenant au moins un élément métallique provoquant des variations dans un champ magnétique, de préférence un corps de fer, ou comprend au moins un élément d'émission de signal actif, en particulier un émetteur de signal émettant un signal électrique ou optique ou magnétique, de préférence dans lequel l'émetteur de signal est alimenté en énergie électrique par un panneau solaire couplé électriquement à la station d'approvisionnement en eau (110).

13. Système comprenant un véhicule d'entretien de jardin (10) selon l'une quelconque des revendications 1 à 9, et une station d'approvisionnement en eau (110) selon l'une quelconque des revendications 10 à 12,
dans lequel l'au moins un élément d'accouplement (90) et le capteur (70) sont disposés sur le véhicule d'entretien de jardin (10) à une hauteur au-dessus du sol (G) qui est adaptée à une hauteur au-dessus du sol (G) de la sortie d'eau (120) et/ou d'un élément de marquage de position (140) attaché à la station d'approvisionnement en eau (110), de telle sorte que le capteur (70) peut détecter la station d'approvisionnement en eau (110) ou la sortie d'eau (120) ou l'élément de marquage de position (140) lorsqu'il est déplacé à proximité ou au-dessus de la station d'approvisionnement en eau (110) ou de la sortie d'eau (120) ou de l'élément de marquage de position (140) et/ou de telle sorte que l'au moins un élément d'accouplement (90) est amené dans une position qui permet l'accouplement de l'élément d'accouplement (90) avec la sortie d'eau (120) en le déplaçant vers la sortie d'eau (120).

14. Système selon la revendication 13, **caractérisé en ce que** le véhicule d'entretien de jardin (10), lorsqu'il se trouve dans la position par rapport à la sortie d'eau externe (120) de la station d'approvisionnement en eau (110) dans laquelle l'au moins un élément d'accouplement (90) peut être accouplé à la sortie d'eau externe (120), provoque l'accouplement de l'au moins un élément d'accouplement (90) avec la sortie d'eau externe (120), en particulier en provoquant l'entrainement de l'élément d'accouplement (90) dans la direction d'accouplement (CD) vers la sortie d'eau externe (120),
ou
dans lequel le véhicule d'entretien de jardin (10), lorsqu'il se trouve dans la position par rapport à la sortie d'eau externe (120) de la station d'approvisionnement en eau (110) dans laquelle l'au moins un élément d'accouplement (90) peut être accouplé à la sortie d'eau externe (120), communique avec une unité de commande couplée à la station d'approvisionnement en eau (110) ou directement avec la station d'approvisionnement en eau (110), dans lequel, en réponse à ladite communication, la sortie d'eau externe (120) est amenée à s'accoupler avec l'au moins un élément d'accouplement (90), en particulier en provoquant l'entraînement de la sortie d'eau externe (120) dans la direction d'accouplement (CD) vers l'au moins un élément d'accouplement (90).

15. Système selon la revendication 13 ou 14, **caractérisé en ce que** le capteur (70) est un capteur à effet Hall et **en ce que** l'élément de marquage de position (140) est un aimant permanent,
ou
dans lequel le capteur (70) est un électroaimant et dans lequel l'élément de marquage de position (140) est un élément métallique, en particulier un corps en fer conçu pour provoquer une variation dans un champ magnétique généré par l'électroaimant,
ou
dans lequel le capteur (70) est un récepteur de signal et dans lequel l'élément de marquage de position (140) est un émetteur de signal émettant un signal électrique ou optique ou magnétique, en particulier dans lequel l'émetteur de signal est alimenté en énergie électrique par un panneau solaire couplé électriquement à la station d'approvisionnement en eau (110),
ou
dans lequel le capteur (70) est une caméra configurée pour capturer des images de l'environnement entourant le véhicule d'entretien de jardin (10) qui permettent au véhicule d'entretien de jardin de naviguer dans le second mode de navigation jusqu'à la position par rapport à la sortie d'eau externe (120) de la station d'approvisionnement en eau (110) dans laquelle l'au moins un élément d'accouplement (90) peut être accouplé à la sortie d'eau externe (120).
